# EUROPEAN PATENT APPLICATION

(11) **EP 2 423 827 A1**
(43) Date of publication of application: **29.02.2012**
(21) Application number: 10174228.6
(22) Date of filing: 26.08.2010
(51) Int. Cl.: G06F 13/40

(54) **USB to I2C and SPI bridge**

(71) Applicant: Research In Motion Limited, Waterloo, ON N2L 3W8 (CA)
(72) Inventor: Lee, Jonathan Hone San, Coquitlam British Columbia (CA)
(74) Representative: Roberts, Gwilym Vaughan

(57) **Abstract**

A bridge is provided. The bridge includes a first component configured to connect to a universal serial bus (USB) port, receive a serial-based message through the USB port, and transfer the serial-based message to an output port on the first component. The bridge further includes a second component configured to connect to the output port of the first component, receive the serial-based message, and cause an action on a serial peripheral bus system, the action corresponding to the serial-based message.

## Description

Several protocols have been developed to allow low-speed peripheral devices to connect to computing devices or systems. For example, the Inter-Integrated Circuit (l²C) bus, the Serial Peripheral interface (SPI) bus, the 1-Wire bus, the UNI/O bus, and similar protocols might be used for such purposes. Any such bus will be referred to herein as a serial peripheral bus. Also, the terms "bus" and "protocol" may be used interchangeably herein when reference is made to a means for connecting a low-speed peripheral device to a computing device or system. Such low-speed peripheral devices might include electrically erasable programmable read-only memory (EEPROM) devices, memory chips, digital-to-analog or analog-to-digital converters, monitors, speakers, display screens, clocks, and other devices that might be known to one of skill in the art.

A USB (Universal Serial Bus) cable can provide an interface between a host device and one or more peripheral devices, such as mobile telephones, personal digital assistants, personal media players, cameras, printers, keyboards, mice, and removable media drives. Such peripheral devices may also be referred to as slave devices or downstream devices. The host device, which may also be referred to as a master device or an upstream device, is typically a computer system such as a personal computer.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.

Figure 1 illustrates a connection between a computing system and a serial peripheral bus system according to the prior art.

Figure 2 illustrates a connection between a computing system and a serial peripheral bus system according to an embodiment of the disclosure.

Figure 3 is a flowchart for a method for controlling a serial peripheral serial bus system according to an embodiment of the disclosure.

Figure 4 illustrates a processor and related components suitable for implementing the several embodiments of the present disclosure.

### DETAILED DESCRIPTION

It should be understood at the outset that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

Embodiments of the present disclosure provide for a connection between a serial peripheral bus system and a USB port on a computing system without the use of firmware in the connection components. The absence of firmware in the connection components eliminates the need for firmware maintenance or modifications. Serial-based software instructions can be stored on the computing system and passed through the connection components to the serial peripheral bus system.

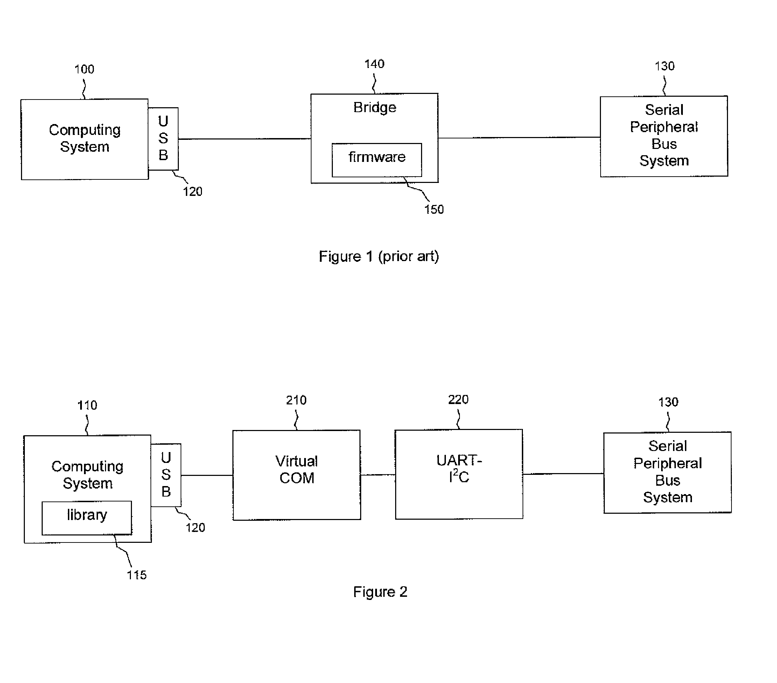

Figure 1 illustrates a configuration that might have been used in the prior art to connect a serial peripheral bus system to a USB port on a computing system. A computing system 100 might be a desktop computer, a laptop computer, a smart phone, a personal digital assistant, an embedded system, or a similar device or system that is capable of processing software-based instructions and connecting to one or more peripheral devices. Peripheral devices can connect to the computing system 100 via a USB port 120. A serial peripheral bus system 130 might include one or more devices that follow the l²C protocol, the SPI protocol, or similar protocols.

Previously, when a connection was needed between the USB port 120 on the computing system 100 and the serial peripheral bus system 130, a bridge component 140 might be used to connect the two systems. A USB-based message might be sent from the computing system 100 to the bridge 140, and the bridge 140 might then send a corresponding serial-based message to the serial peripheral bus system 130. The bridge 140 might include a microcontroller that executes firmware 150 that converts the USB-based message to the serial-based message. That is, the firmware 150 can recognize USB-based messages, and when the firmware 150 recognizes a USB message received from the computing system 100, the firmware 150 causes the bridge 140 to perform a corresponding serial-based operation on the serial peripheral bus system 130. An example of a device that might act as the bridge 140 is the "PSoC USB to 12C" device.

The firmware 150 may need to be maintained or modified at some point after it has been deployed in the bridge 140. Since such maintenance or modification activities may be time-consuming and prone to error, it may be desirable to eliminate the use of the firmware 150 in the connection between the computing system 100 and the serial peripheral bus system 130.

In an embodiment, a computing system can send messages to a serial peripheral bus system through bridge components that do not use firmware. A first component can connect to a USB port on the computing system and cause the USB port to appear to the computing system as a serial port. The computing system can then send serial-based messages through the USB port to the first component. A second component can connect to the first component and receive serial-based messages from the first component. The second component can then convert the serial-based messages into a format appropriate for a serial peripheral bus system. The serial peripheral bus system can connect to the second component and receive messages from the second component.

Figure 2 illustrates an embodiment of such a system. A computing system 110 with a USB port 120 is connected to a first component 210 that is capable of bridging a USB protocol and a universal asynchronous receiver/transmitter (UART) protocol. In the illustrated embodiment, the first component 210 is a virtual COM port, such as the Future Technology Devices International (FTDI) FT232BL device or the Prolific Technology, Inc. PL-2303HX device. In other embodiments, the first component 210 could be any other component capable of bridging a USB protocol and a UART protocol and/or capable of causing the USB port 120 to appear as a serial port.

The first component 210 is connected to a second component 220 that is capable of bridging a UART protocol and a serial peripheral bus protocol. In the illustrated embodiment, the second component 220 is a UART-l²C controller, such as the NXP SC18lM700 manufactured by NXP Semiconductors. In other embodiments, the second component 220 could be any other component capable of bridging a UART protocol and a serial peripheral bus protocol. The capabilities of the second component 220 are typically specified in a data sheet. For a UART-l²C controller, for example, a data sheet might specify the l²C outputs that will be generated by a specified UART input.

In contrast with the bridge 140 of Figure 1, neither the virtual COM component 210 nor the UART-l²C component 220 contains firmware or a microcontroller. That is, the virtual COM component 210 and the UART-l²C component 220 are hardware components that do not include a capability to store or execute software-based or firmware-based instructions. Instead, software-based instructions for communication through a serial port are stored and executed on the computing system 110. The software-based instructions correspond to instructions defined in the data sheet for the UART-l²C component 220 such that a serial-based instruction executed on the computing system 110 causes an appropriate input into the UART-l²C component 220 after passing through the virtual COM component 210. The UART-l²C component 220 is hard-wired to perform specified actions on the serial peripheral bus system 130 upon receiving specified inputs. Thus, when the computing system 110 transmits an appropriate serial command through the virtual COM component 210 to the UART-l²C component 220, the UART-l²C component 220 performs an appropriate action on the serial peripheral bus system 130

In an embodiment, the computing system 110 includes a library 115 of serial-based instructions that correspond to instructions defined in the data sheet for the UART-l²C component 220. That is, one or more instructions can be stored in a memory component in the computing system 110, and when such an instruction is retrieved from memory and transmitted through the virtual COM component 210 to the UART-l²C component 220, the UART-l²C component 220 performs an action corresponding to the retrieved instruction.

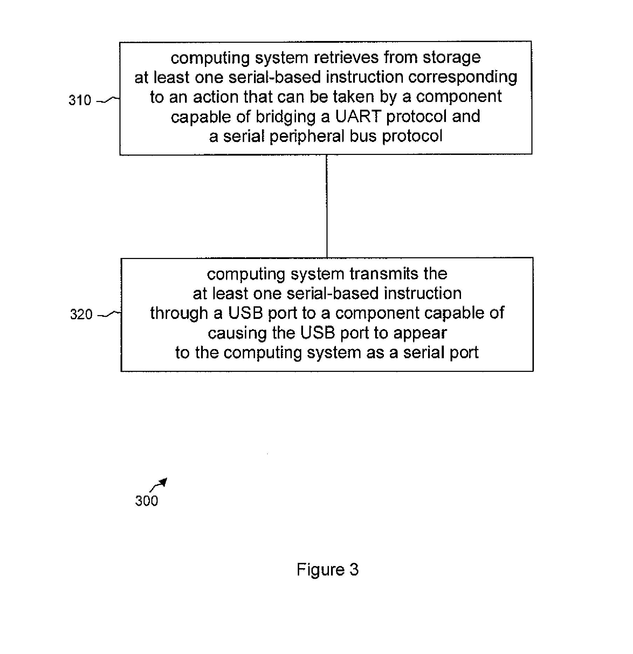

Figure 3 is a flowchart that illustrates an embodiment of a method 300 for controlling a serial peripheral bus system. At block 310, a computing system retrieves from storage at least one serial-based instruction corresponding to an action that can be taken by a component capable of bridging a UART protocol and a serial peripheral bus protocol. At block 320, the computing system transmits the at least one serial-based instruction through a USB port to a component capable of causing the USB port to appear to the computing system as a serial port. The component capable of causing the USB port to appear as a serial port transmits the at least one serial-based instruction to the component capable of bridging the UART protocol and the serial peripheral bus protocol. The component capable of bridging the UART protocol and the serial peripheral bus protocol causes in the serial peripheral bus system the action corresponding to the at least one serial-based instruction.

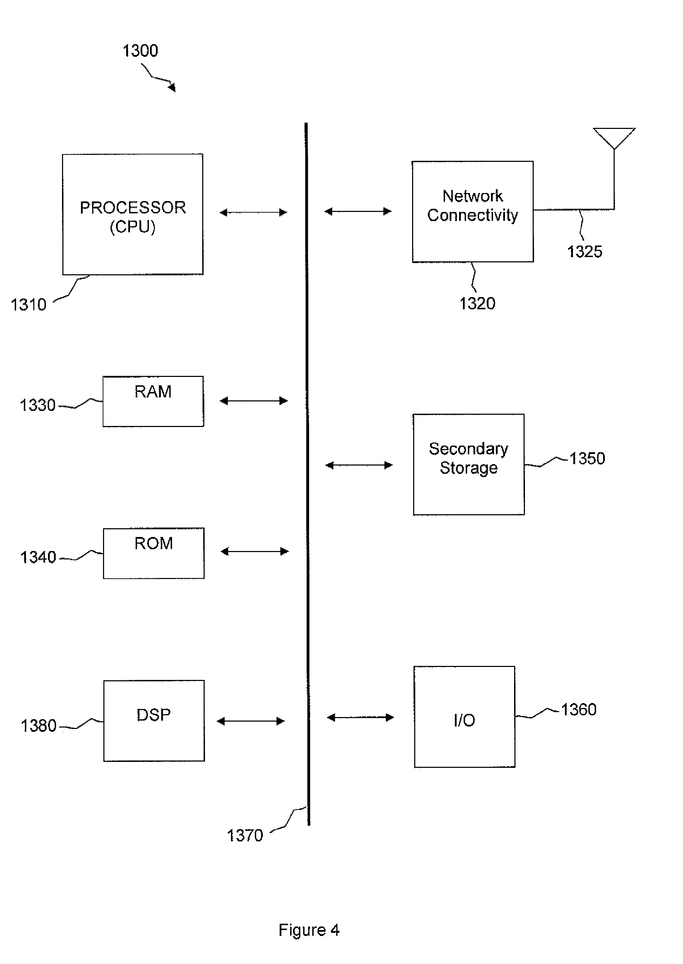

The computing system 110 of Figure 2 might include a processing component that is capable of executing instructions related to the actions described above. Figure 4 illustrates an example of a system 1300 that includes a processing component 1310 suitable for implementing one or more embodiments disclosed herein. In addition to the processor 1310 (which may be referred to as a central processor unit or CPU), the system 1300 might include network connectivity devices 1320, random access memory (RAM) 1330, read only memory (ROM) 1340, secondary storage 1350, and input/output (I/O) devices 1360. These components might communicate with one another via a bus 1370. In some cases, some of these components may not be present or may be combined in various combinations with one another or with other components not shown. These components might be located in a single physical entity or in more than one physical entity. Any actions described herein as being taken by the processor 1310 might be taken by the processor 1310 alone or by the processor 1310 in conjunction with one or more components shown or not shown in the drawing, such as a digital signal processor (DSP) 1380. Although the DSP 1380 is shown as a separate component, the DSP 1380 might be incorporated into the processor 1310.

The processor 1310 executes instructions, codes, computer programs, or scripts that it might access from the network connectivity devices 1320, RAM 1330, ROM 1340, or secondary storage 1350 (which might include various disk-based systems such as hard disk, floppy disk, or optical disk). While only one CPU 1310 is shown, multiple processors may be present. Thus, while instructions may be discussed as being executed by a processor, the instructions may be executed simultaneously, serially, or otherwise by one or multiple processors. The processor 1310 may be implemented as one or more CPU chips.

The network connectivity devices 1320 may take the form of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, global system for mobile communications (GSM) radio transceiver devices, worldwide interoperability for microwave access (WiMAX) devices, digital subscriber line (xDSL) devices, data over cable service interface specification (DOCSIS) modems, and/or other well-known devices for connecting to networks. These network connectivity devices 1320 may enable the processor 1310 to communicate with the Internet or one or more telecommunications networks or other networks from which the processor 1310 might receive information or to which the processor 1310 might output information.

The network connectivity devices 1320 might also include one or more transceiver components 1325 capable of transmitting and/or receiving data wirelessly in the form of electromagnetic waves, such as radio frequency signals or microwave frequency signals. Alternatively, the data may propagate in or on the surface of electrical conductors, in coaxial cables, in waveguides, in optical media such as optical fiber, or in other media. The transceiver component 1325 might include separate receiving and transmitting units or a single transceiver. Information transmitted or received by the transceiver component 1325 may include data that has been processed by the processor 1310 or instructions that are to be executed by processor 1310. Such information may be received from and outputted to a network in the form, for example, of a computer data baseband signal or signal embodied in a carrier wave. The data may be ordered according to different sequences as may be desirable for either processing or generating the data or transmitting or receiving the data. The baseband signal, the signal embedded in the carrier wave, or other types of signals currently used or hereafter developed may be referred to as the transmission medium and may be generated according to several methods well known to one skilled in the art.

The RAM 1330 might be used to store volatile data and perhaps to store instructions that are executed by the processor 1310. The ROM 1340 is a non-volatile memory device that typically has a smaller memory capacity than the memory capacity of the secondary storage 1350. ROM 1340 might be used to store instructions and perhaps data that are read during execution of the instructions. Access to both RAM 1330 and ROM 1340 is typically faster than to secondary storage 1350. The secondary storage 1350 is typically comprised of one or more disk drives or tape drives and might be used for non-volatile storage of data or as an over-flow data storage device if RAM 1330 is not large enough to hold all working data. Secondary storage 1350 may be used to store programs that are loaded into RAM 1330 when such programs are selected for execution.

The I/O devices 1360 may include liquid crystal displays (LCDs), touch screen displays, keyboards, keypads, switches, dials, mice, track balls, voice recognizers, card readers, paper tape readers, printers, video monitors, or other well-known input/output devices. Also, the transceiver 1325 might be considered to be a component of the I/O devices 1360 instead of or in addition to being a component of the network connectivity devices 1320.

In an embodiment, a bridge is provided. The bridge includes a first component configured to connect to a USB port, receive a serial-based message through the USB port, and transfer the serial-based message to an output port on the first component. The bridge further includes a second component configured to connect to the output port of the first component, receive the serial-based message, and cause an action on a serial peripheral bus system, the action corresponding to the serial-based message.

In another embodiment, a computing system is provided. The computing system includes a storage component configured to store at least one serial-based instruction corresponding to an action that can be taken by a component capable of bridging a UART protocol and a serial peripheral bus protocol. The computing system further includes a processor configured to transmit the at least one serial-based instruction through a USB port to a component capable of causing the USB port to appear to the computing system as a serial port, wherein the component capable of causing the USB port to appear as a serial port transmits the at least one serial-based instruction to the component capable of bridging the UART protocol and the serial peripheral bus protocol. The component capable of bridging the UART protocol and the serial peripheral bus protocol causes in a serial peripheral bus system the action corresponding to the at least one serial-based instruction.

In another embodiment, a method is provided for controlling a serial peripheral bus system. The method comprises a computing system retrieving from storage at least one serial-based instruction corresponding to an action that can be taken by a component capable of bridging a UART protocol and a serial peripheral bus protocol. The method further comprises the computing system transmitting the at least one serial-based instruction through a USB port to a component capable of causing the USB port to appear to the computing system as a serial port. The component capable of causing the USB port to appear as a serial port transmits the at least one serial-based instruction to the component capable of bridging the UART protocol and the serial peripheral bus protocol. The component capable of bridging the UART protocol and the serial peripheral bus protocol causes in the serial peripheral bus system the action corresponding to the at least one serial-based instruction.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. A bridge, comprising:
a first component configured to connect to a universal serial bus (USB) port, receive
a serial-based message through the USB port, and transfer the serial-based message to an output port on the first component; and
a second component configured to connect to the output port of the first component,
receive the serial-based message, and cause an action on a serial peripheral bus system, the action corresponding to the serial-based message.

2. The bridge of claim 1, wherein neither the first component nor the second component includes firmware.

3. The bridge of claim 1, wherein neither the first component nor the second component includes a microcontroller.

4. The bridge of claim 1, wherein the first component is a virtual COM component.

5. The bridge of claim 1, wherein the second component is a universal asynchronous receiver/transmitter (UART) to Inter-Integrated Circuit (l²C) controller.

6. A computing system, comprising:
a storage component configured to store at least one serial-based instruction
corresponding to an action that can be taken by a component capable of bridging a universal asynchronous receiver/transmitter (UART) protocol and a serial peripheral bus protocol; and
a processor configured to retrieve the at least one serial-based instruction from the
storage component and transmit the at least one serial-based instruction through a universal serial bus (USB) port to a component capable of causing the USB port to appear to the computing system as a serial port, wherein the component capable of causing the USB port to appear as a serial port transmits the at least one serial-based instruction to the component capable of bridging the UART protocol and the serial peripheral bus protocol, and wherein the component capable of bridging the UART protocol and the serial peripheral bus protocol causes in a serial peripheral bus system the action corresponding to the at least one serial-based instruction.

7. The computing system of claim 6, wherein neither the component capable of causing the USB port to appear as a serial port nor the component capable of bridging the UART protocol and the serial peripheral bus protocol includes firmware.

8. The computing system of claim 6, wherein neither the component capable of causing the USB port to appear as a serial port nor the component capable of bridging the UART protocol and the serial peripheral bus protocol includes a microcontroller.

9. The computing system of claim 6, wherein the component capable of causing the USB port to appear as a serial port is a virtual COM component.

10. The computing system of claim 6, wherein the component capable of bridging the UART protocol and the serial peripheral bus protocol is a UART to Inter-Integrated Circuit (l²C) controller.

11. A method for controlling a serial peripheral bus system, comprising:
a computing system retrieving from storage at least one serial-based instruction
corresponding to an action that can be taken by a component capable of bridging a universal asynchronous receiver/transmitter (UART) protocol and a serial peripheral bus protocol; and
the computing system transmitting the at least one serial-based instruction through
a universal serial bus (USB) port to a component capable of causing the USB port to appear to the computing system as a serial port, wherein the component capable of causing the USB port to appear as a serial port transmits the at least one serial-based instruction to the component capable of bridging the UART protocol and the serial peripheral bus protocol, and wherein the component capable of bridging the UART protocol and the serial peripheral bus protocol causes in the serial peripheral bus system the action corresponding to the at least one serial-based instruction.

12. The method of claim 11, wherein neither the component capable of causing the USB port to appear as a serial port nor the component capable of bridging the UART protocol and the serial peripheral bus protocol includes firmware.

13. The method of claim 11, wherein neither the component capable of causing the USB port to appear as a serial port nor the component capable of bridging the UART protocol and the serial peripheral bus protocol includes a microcontroller.

14. The method of claim 11, wherein the component capable of causing the USB port to appear as a serial port is a virtual COM component.

15. The method of claim 11, wherein the component capable of bridging the UART protocol and the serial peripheral bus protocol is a UART to Inter-Integrated Circuit (l²C) controller.

## Amended claims

### Amended claims in accordance with Rule 137(2) EPC.

**1.** A bridge, comprising:
a first component (210) configured to connect to a universal serial bus, known as "USB" port (120), receive a serial-based message through the USB port (120), and transfer the serial-based message to an output port on the first component; and
a second component (220) configured to connect to the output port of the first component (210), receive the serial-based message, and cause an action on a serial peripheral bus system (130), the action corresponding to the serial-based message.

**2.** The bridge of claim 1, wherein neither the first component (210) nor the second component (220) includes firmware.

**3.** The bridge of claim 1, wherein neither the first component (210) nor the second component (220) includes a microcontroller.

**4.** The bridge of claim 1, wherein the first component (210) is a virtual COM component.

**5.** The bridge of claim 1, wherein the second component (220) is a universal asynchronous receiver/transmitter to Inter-Integrated Circuit controller.

**6.** The bridge of claim 1, further comprising a computing system (110), comprising:
a storage component (115) configured to store at least one serial-based instruction corresponding to an action that can be taken by the second component (220) and
a processor (1310) configured to retrieve the at least one serial-based instruction from the storage component (115) and transmit the at least one serial-based instruction through the USB port (120) to the first component (210), wherein the first component (210) transmits the at least one serial-based instruction to the second component (220), and wherein the second component (220) causes in the serial peripheral bus system (130) the action corresponding to the at least one serial-based instruction.

**7.** A method (300) for controlling a serial peripheral bus system (130), comprising:
a computing system (110) retrieving from storage (115) at least one serial-based instruction corresponding to an action that can be taken by a component (220) capable of bridging a universal asynchronous receiver/transmitter, known as UART, protocol and a serial peripheral bus protocol; and
the computing system (110) transmitting the at least one serial-based instruction through a universal serial bus, known as USB port (120) to a component (210) capable of causing the USB port (120) to appear to the computing system (110) as a serial port, wherein the component (210) capable of causing the USB port (120) to appear as a serial port transmits the at least one serial-based instruction to the component (220) capable of bridging the UART protocol and the serial peripheral bus protocol, and wherein the component (220) capable of bridging the UART protocol and the serial peripheral bus protocol causes in the serial peripheral bus system (130) the action corresponding to the at least one serial-based instruction.

**8.** The method (300) of claim 7, wherein neither the component (210) capable of causing the USB port (120) to appear as a serial port nor the component (220) capable of bridging the UART protocol and the serial peripheral bus protocol includes firmware.

**9.** The method (300) of claim 7, wherein neither the component (210) capable of causing the USB port (210) to appear as a serial port nor the component (220) capable of bridging the UART protocol and the serial peripheral bus protocol includes a microcontroller.

**10.** The method (300) of claim 7, wherein the component (210) capable of causing the USB port (120) to appear as a serial port is a virtual COM component.

**11.** The method (300) of claim 7, wherein the component (220) capable of bridging the UART protocol and the serial peripheral bus protocol is a UART to Inter-Integrated Circuit controller.
